# EUROPÄISCHE PATENTSCHRIFT

(11) **EP 3 507 889 B1**
(45) Veröffentlichungstag und Bekanntmachung des Hinweises auf die Patenterteilung: **07.10.2020**
(21) Anmeldenummer: 17746114.2
(22) Anmeldetag: 01.08.2017
(51) Int. Cl.: H02K 1/30, H02K 1/32, H02K 9/19, H02K 15/02, H02K 17/16

(54) **ROTOR FÜR EINE ELEKTRISCHE MASCHINE**
ROTOR FOR AN ELECTRICAL MACHINE
ROTOR POUR UNE MACHINE ELECTRIQUE

(30) Priorität: 02.09.2016 DE 102016216685
(43) Veröffentlichungstag der Anmeldung: 10.07.2019
(73) Patentinhaber: Vitesco Technologies GmbH, 30165 Hannover (DE)
(72) Erfinder: FRÖHLICH, Holger, 13127 Berlin (DE); FUKUMOTO, Isao, 14167 Berlin (DE)
(74) Vertreter: Waldmann, Georg Alexander
(86) Internationale Anmeldenummer: PCT/EP2017/069428
(87) Internationale Veröffentlichungsnummer: WO 2018/041504

(56) Entgegenhaltungen:
- WO-A1-2006/064860
- DE-A1-102007 056 206
- DE-A1-102012 022 453
- DE-A1-102012 110 157
- JP-U- S57 146 739

## Beschreibung

Die Erfindung betrifft einen Rotor für eine elektrische Maschine. Ein weiterer Anspruch ist auf eine elektrische Maschine mit dem Rotor gerichtet, insbesondere eine elektrische Maschine für einen Kraftfahrzeugantriebsstrang.

Aus dem allgemeinen Stand der Technik sind elektrische Maschinen für einen Kraftfahrzeugantriebsstrang, insbesondere für einen Hybridantrieb, bekannt. Um die elektrischen Maschinen zu kühlen, ist es dabei üblich, Luft oder gegebenenfalls auch Wasser zur Kühlung der elektrischen Maschine einzusetzen und dieses Kühlmedium durch zumindest einen Bereich der jeweiligen elektrischen Maschine zu leiten. Die Kühlung der elektrischen Maschinen ist dabei eingeschränkt, da über einen von der Flüssigkeit durchströmten Kühlwärmetauscher typischerweise lediglich bestimmte Bereiche, wie das Statorblechpaket der elektrischen Maschine gekühlt werden können, und in anderen Bereichen üblicherweise eine derartige Kühlung nicht möglich ist. Zudem ist bei vielen Anwendungen elektrischer Maschinen ein zur Verfügung stehender Bauraum begrenzt. Ein üblicherweise zu integrierender Wassermantel oder Lüfter geht hierbei zu Lasten des eigentlichen Bauraums für die elektrische Maschine. Grundsätzlich ist davon auszugehen, dass eine intensive Kühlung der elektrischen Maschine deren Wirkungsgrad steigert.

Deshalb haben sich für den genannten Einsatzzweck elektrische Maschinen etabliert, welche über eine elektrisch isolierende Kühlflüssigkeit, zum Beispiel ein Öl, gekühlt werden. Solche ölgekühlten elektrischen Maschinen weisen neben einem von Öl durchströmten Wärmetauscher typischerweise eine direkte Kühlung des Stators bzw. des Rotors der elektrischen Maschine auf.

Aus der DE 39 10 451 A1 ist bekannt, bei einer Drehstromlichtmaschine Öl auf ein Ständereisen und dessen umliegende Teile direkt aufzusprühen und zu zerstäuben, und zwar durch eine Öldruckkraft sowie durch eine infolge einer Rotation einer Erregerwicklung erzeugte Fliehkraft, sodass eine Ständerwicklung gekühlt werden kann. Ein Teil des versprühten Öls, dass die Ständerwicklung entweder nicht erreicht hat oder von ihr abtropft, gelangt auf die umlaufende Erregerwicklung, sodass dadurch das Ständereisen gekühlt wird. Das Öl kann dann zum Boden der Lagerschilde abfließen und zum Ölvorrat durch die Ölaustrittsöffnung zurückgeleitet werden. Somit wird das Öl erneut kreislaufgeführt, um die Wärme von der Ständerwicklung und der Erregerwicklung während des Betriebs der Drehstromlichtmaschine unmittelbar zu absorbieren, wodurch die Drehstromlichtmaschine wirksam gekühlt wird. Es ist ersichtlich, dass dieses direkte Kühlsystem hinsichtlich einer Isolation und Korrosion unproblematisch ist, da das Öl ein elektrischer Isolator und nicht korrosiv ist. Die Kühlung eines Gleichrichters kann zum Beispiel dadurch erfolgen, dass dieser an der Außenseite des Lagerschilds montiert und ein Teil des Ölkanals im Lagerschild vorgesehen wird.

Ferner ist bekannt, dass insbesondere Mittelspannungs- und Niederspannungsmotoren rotorkritisch sind, d.h. dass der Rotor einen "Hotspot" darstellt, den es zu kühlen gilt. Daraus folgt dass durch eine Optimierung der Rotorkühlung die Leistungsfähigkeit der elektrischen Maschine optimiert werden kann.

Aus der JP S57 146739 U ist eine elektrische Maschine gemäß dem Oberbegriff des Anspruchs 1 bekannt, bei der ein Füllkörper an ein Blechpaket angegossen ist, und durch den Füllkörper eine Rotorwelle geführt ist.

Die DE 10 2012 022453 A1 beschreibt eine elektrische Maschine, wobei auf einer Rotorwelle ein Blechpaket angeordnet ist, und durch die Rotorwelle ein Kühlkanal geführt ist.

Die WO 2006/064860 A1 zeigt einen Motor mit einer zweifach isolierten Struktur. Dabei ist auf einer Rotorwelle ein Blechpaket angeordnet, wobei zwischen dem Blechpaket und der Rotorwelle ein Isolationskörper angeordnet ist.

Die DE 10 2007 056206 A1 offenbart einen Rotor für einen Elektromotor, bei dem eine Rotorwelle aus einem Kunststoff an ein Blechpaket angegossen ist.

Aus der DE 10 2012 110 157 A1 ist ein Rotor für eine Asynchronmaschine bekannt, wobei der Rotor ein Blechlamellenpaket aufweist, an dem stirnseitig Endscheiben mit Zentriermitteln zur Zentrierung der Endscheiben zur Rotorachse angeordnet sind. Eine Aufgabe der Erfindung kann darin gesehen werden, einen besonders leichten und effizient kühlbaren Rotor für eine elektrische Maschine, insbesondere eine schnelllaufende elektrische Maschine bereitzustellen, wobei der Rotor extrem hohen Belastungen bei großen Drehzahlen mechanisch gewachsen ist.

Die Aufgabe wird durch den Gegenstand des unabhängigen Anspruchs gelöst. Vorteilhafte Ausführungsformen der Erfindung sind Gegenstand der abhängigen Ansprüche.

Gemäß einem ersten Aspekt der Erfindung wird ein Rotor für eine elektrische Maschine gemäß Anspruch 1 bereitgestellt.

Der erfindungsgemäße Rotor weist abweichend vom Stand der Technik eine Architektur auf, mit der sich auf einen aktiv magnetflusslenkenden Blechpaketquerschnitt beschränkt werden kann, wodurch eine signifikante Gewichtsreduzierung des Rotors und eine Senkung dessen Massenträgheitsmoments ermöglicht wird. Dabei kann ein Durchmesser einer zentralen Bohrung innerhalb des Rotorblechpakets besonders groß gewählt werden. Auf ein aktives Füllmaterial eines Blechzuschnitts zwischen einer Rotorwelle und aktivem Blechmaterial des Rotorblechpakets kann hingegen verzichtet werden. Stattdessen kann bei einem Angießen von Kurzschlussringen und Kurzschlussstäben an das Rotorblechpaket auch der Bereich der ehemals inaktiven Blechzone mit einer Schmelze, insbesondere mit einer Leichtmetalllegierung, z.B. mit einer Aluminium-Druckgusslegierung, zumindest teilweise ausgegossen werden, wodurch der Füllkörper gebildet wird. Der angegossenen Füllkörper kann zur Zentrierung der Wellenzapfen auf beiden Seiten des Rotors dienen. Die durch den Rotor bauartbedingten Vorteile können für eine Integration der Funktionen der Rotorkühlung auf unterschiedliche Art und Weise genutzt werden.

Der Füllkörper erfüllt weiterhin insbesondere die Funktion, Momente zwischen den Wellenzapfen und dem Rotorblechpaket zu übertragen. Dazu kann der Füllkörper derart an das Rotorblechpaket angegossen sein, dass der Füllkörper formschlüssig mit dem Rotorblechpaket verbunden ist. Weiterhin können die Wellenzapfen formschlüssig und kraftschlüssig mit dem Füllkörper verbunden sein. Vorteilhaft ist hierbei, dass auf eine durchgehende Welle verzichtet werden kann, und stattdessen ein übertragbares Drehmoment über die zwei Wellenzapfen gewährleistet werden kann.

Der Rotor gemäß dem ersten Aspekt der Erfindung zeichnet sich durch ein besonders geringes rotatorisches Massenträgheitsmoment aus. Das besonders geringe Gewicht des Kurschlussläufers ist von besonderem Wert für die Antriebseffizienz, da es sich bei dem Rotor um ein rotierendes Bauteil handelt, denn das rotatorische Massenträgheitsmoment des Rotors kann bei dieser Bauweise um mindestens 10 % gesenkt werden. Dieser Faktor bietet für den Beschleunigungsvorgang Effizienzvorteile.

Der die Wellenzapfen und den Füllkörper in axialer Richtung durchsetzende Kühlkanal ermöglicht insbesondere eine direkte Kühlung der Wellenzapfen und des Füllkörpers. Dabei setzt der Kühlkanal zumindest nicht wesentlich den Wirkungsgrad der elektrischen Maschine herab und geht nicht zulasten des Bauraums der elektrischen Maschine.

Eine elektrische Maschine, welche einen erfindungsgemäßen Rotor umfasst, kann bei maximaler Dauerleistungsaufnahme vergleichsweise klein bauen und dennoch eine hohe elektrische Dauerleistung bereitstellen und ein entsprechend hohes Dauerdrehmoment zur Verfügung stellen. Der erfindungsgemäße Rotor bzw. die elektrische Maschine eignet sich daher ideal für den Einsatz in Kraftfahrzeugen, insbesondere in elektrischen oder hybridisierten Antriebssträngen von Fahrzeugen, da hier eine hohe Leistungsfähigkeit bei minimalem Bauraum eine der Kernanforderungen ist. Der erfindungsgemäße Rotor bzw. die elektrische Maschine kann dabei insbesondere als Motor, Generator und/oder Motor-Generator in seriellen oder parallelen hybridisierten Antriebssträngen sowie auch in rein elektrischen Antriebssträngen eingesetzt werden.

Gemäß einer Ausführungsform weist der erste Wellenzapfen eine erste axiale Bohrung auf, der zweite Wellenzapfen weist eine zweite axiale Bohrung auf, und der Füllkörper weist eine dritte axiale Bohrung auf, wobei die dritte axiale Bohrung die erste axiale Bohrung mit der zweiten axialen Bohrung verbindet, sodass die erste Bohrung, die zweite Bohrung und die dritte Bohrung gemeinsam den Kühlkanal ausbilden, welcher durch den ersten Wellenzapfen, den Füllkörper und den zweiten Wellenzapfen verläuft. Gemäß dieser Ausführungsform kann ein Kühlflüssigkeitskanal durch die Montage der Wellenzapfen an dem Füllkörper erzeugt werden. Dabei weisen die Wellenzapfen jeweils eine axiale Bohrung auf, welche zusammen mit einer axialen Bohrung des Füllkörpers den Kühlflüssigkeitskanal bilden. Der Kühlflüssigkeitskanal ermöglicht insbesondere eine direkte Kühlung der Wellenzapfen und des Füllkörpers.

Der erste Wellenzapfen, der zweite Wellenzapfen und der Füllkörper können einteilig ausgebildet sein. Dadurch wird eine als Ganzes an das Rotorblechpaket angegossene Rotorwelle geschaffen, wobei die Wellenzapfen insbesondere als Lagersitz dienen können.

Gemäß einer weiteren Ausführungsform ist vorgesehen, dass das Rotorblechpaket in axialer Richtung formschlüssig und kraftschlüssig mit dem Füllkörper verbunden ist. Der Füllkörper kann gemäß dieser Ausführungsform eine Klammerfunktion für die einzelnen Bleche des Rotorblechpakets übernehmen. Insbesondere kann der Füllkörper derart an das Rotorblechpaket angegossen sein, dass das Rotorblechpaket in einer umfänglichen Ausnehmung des Füllkörpers aufgenommen ist, wobei die Ausnehmung begrenzende Endabschnitte des Füllkörpers eine Verschiebung des Rotorblechpakets in axialer Richtung verhindern und das Rotorblechpaket in axialer Richtung kraftschlüssig zusammenhalten/verklammern können.

Wenigstens einer der Wellenzapfen kann weiterhin einen stirnseitig angeordneten Ansatz zur Zentrierung aufweisen. Der Ansatz kann in eine korrespondierende Ausnehmung innerhalb des Füllkörpers gesteckt werden, wodurch der jeweilige Zapfen gegenüber dem Füllkörper ausgerichtet und damit zentriert werden kann. Außerdem kann der Ansatz zur Zentrierung mehrere über den Außenumfang des Ansatzes verteilte Mitnehmernuten aufweisen, in welche jeweils ein Mitnehmerzapfen des Füllkörpers eingreifen kann, so dass eine in Drehrichtung des Rotors formschlüssige Verbindung zwischen dem Wellenzapfen und dem Füllkörper im Sinne eines Rotor-Momenten-Mitnehmers geschaffen wird.

Gemäß einer weiteren Ausführungsform umfasst der Rotor ferner ein Medienkanalelement, wobei der erste Wellenzapfen eine erste axiale Bohrung aufweist und der zweite Wellenzapfen eine zweite axiale Bohrung aufweist. Das Medienkanalelement zwischen ist den Wellenzapfen und dem Füllkörper angeordnet und bildet zwischen sich und dem Füllkörper einen mantelförmigen Hohlraum aus. Das Medienkanalelement weist ferner eine vierte axiale Bohrung auf, wobei die vierte axiale Bohrung die erste Bohrung des ersten Wellenzapfens mit der zweiten Bohrung des zweiten Wellenzapfens verbindet, sodass die erste axiale Bohrung, die zweite axiale Bohrung und die vierte axiale Bohrung gemeinsam den Kühlkanal ausbilden, welcher durch den ersten Wellenzapfen, den Füllkörper und das Medienkanalelement verläuft. Diese alternative Ausgestaltung des Kühlkanals hat insbesondere den Vorteil, dass durch den Hohlraum zwischen dem Medienkanalelement und dem Füllkörper Masse eingespart werden kann, was sich insbesondere positiv auf das Massenträgheitsmoment der elektrischen Maschine auswirkt.

Der erste Wellenzapfen und/oder der zweite Wellenzapfen können einteilig mit dem Medienkanalelement ausbildet sein. Dadurch lässt sich insbesondere die Anzahl der zu fertigenden Einzelelemente der elektrischen Maschine verringern, was sich insbesondere positiv auf den Herstellungsaufwand und den Montageaufwand auswirken kann.

Der Rotor kann weiterhin einen ersten Kurschlussring und einen zweiten Kurzschlussring umfassen, wobei der erste Wellenzapfen wenigstens eine erste radiale Bohrung aufweist, und der zweite Wellenzapfen wenigstens eine zweite radiale Bohrung aufweist. Die wenigstens eine erste radiale Bohrung kann mit der ersten axialen Bohrung verbunden sein, und die wenigstens eine zweite radiale Bohrung kann mit der zweiten axialen Bohrung verbunden sein. Der erste Kurzschlussring kann die wenigstens eine erste radiale Bohrung radial umgeben, und der zweite Kurzschlussring kann die wenigstens eine zweite radiale Bohrung radial umgeben, sodass bei einer Rotation der Wellenzapfen ein Kühlmedium aus den radialen Bohrungen radial nach außen in Richtung der Kurzschlussringe geschleudert werden kann und die Kurzschlussringe kühlen kann.

Gemäß dieser Ausführungsform verbinden die wenigstens eine erste radiale Bohrung und die wenigstens eine zweite radiale Bohrung die erste/zweite axiale Bohrung des ersten/zweiten Wellenzapfens mit dem Außenumfang des ersten/zweiten Wellenzapfens. Statt einer einzigen ersten radialen Bohrung und einer einzigen zweiten Bohrung können auch mehrere erste und zweite radiale Bohrungen vorgesehen sein, welche insbesondere um den Umfang der der Wellenzapfen verteilt sind. Durch die in dem vorstehenden Absatz genannten Merkmale wird eine intensive Kühlung der Kurzschlussringe ermöglicht, wobei die Maßnahmen für die Kühlung den Wirkungsgrad der Asynchronmaschine nicht wesentlich herabsetzen und nicht zulasten des Bauraums der Asynchronmaschine gehen. Besonders geeignet ist das vorstehend beschriebene Kühlprinzip in getriebeintegrierten Elektromaschinen (GEM), welche unterstützend zu einem Verbrennungsmotor eines Kraftfahrzeugs wirken, und in Traktions-Elektromaschinen (TEM), welche allein einen Vortrieb eines Kraftfahrzeugs übernehmen können.

Eine elektrische Maschine mit einem vorstehend beschriebenen Kühlsystem lässt sich bei maximaler Dauerleistungsaufnahme außerordentlich klein und kompakt realisieren, da die Kühlung der Kurzschlussringe über eine Kühlflüssigkeit, insbesondere eine elektrisch isolierende Kühlflüssigkeit, z.B. ein Öl oder einen Ölnebel, erfolgen kann. Dabei bilden die radialen Bohrungen in den Wellenzapfen Düsen, womit die Kühlflüssigkeit mittels Fliehkraft so verteilt werden kann, dass die Kurzschlussringe des Rotors und auch Wickelköpfe eines Stators der elektrischen Maschine gekühlt werden können. Das Kühlprinzip schließt dabei die Kühlung rotierender und feststehender Komponenten der Asynchronmaschine in einem geschlossenen Gehäuse ein. Die bevorzugt elektrisch isolierende Kühlflüssigkeit kann demnach über die Wellenzapfen und den Füllkörper jeweils in den Bereich der Stirnseiten des Rotors geleitet werden, wo die Kühlflüssigkeit durch die Fliehkraft an die Kurzschlussringe geschleudert wird und den Rotor über den "Hotspot Kurzschlussring" kühlt. Der Kurzschlussring besteht bevorzugt aus einer Aluminium-Druckgusslegierung und besitzt somit eine besonders hohe Wärmeleitfähigkeit.

Ferner kann das Medienkanalelement eine dritte radiale Bohrung und eine vierte radiale Bohrung aufweist, wobei die dritte radiale Bohrung und die vierte radiale Bohrung die vierte axiale Bohrung mit dem mantelförmigen Hohlraum verbinden, der erste Wellenzapfen und der Füllkörper zwischen sich eine erste Passage ausbilden, welche den mantelförmigen Hohlraum mit dem ersten Kurzschlussring verbindet, und der zweite Wellenzapfen und der Füllkörper zwischen sich eine zweite Passage ausbilden, welche den mantelförmigen Hohlraum mit dem zweiten Kurzschlussring verbindet. Diese Ausführungsform ermöglicht eine indirekte Kühlung des Rotorblechpakets über den Füllanguss, durch Kühlmittel, welches radial aus der dritten und vierten radialen Bohrung heraus auf eine Innenwand des Füllkörpers geschleudert wird. Weiterhin können die Kurzschlussringe direkt gekühlt werden, indem Kühlmittels aus dem Hohlraum durch die erste/zweite Passage zu dem ersten/zweiten Kurzschlussring gefördert wird.

Gemäß einem zweiten Aspekt der Erfindung wird eine elektrische Maschine bereitgestellt. Die Asynchronmaschine umfasst einen Rotor gemäß dem ersten Aspekt der Erfindung. Weiterhin umfasst die elektrische Maschine einen Stator, einen ersten Statorwickelkopf und einen zweiten Statorwickelkopf. Der erste Statorwickelkopf umgibt den ersten Kurzschlussring, und der zweite Statorwickelkopf umgibt den zweiten Kurzschlussring, sodass bei einer Rotation der Wellenzapfen ein Kühlmedium aus den radialen Bohrungen radial nach außen in Richtung der Statorwickelköpfe geschleudert werden kann und die Statorwickelköpfe kühlen kann.

Die radialen Bohrungen der Wellenzapfen ermöglichen somit, dass bei einer Rotation der Wellenzapfen aus den radialen Bohrungen herausgeschleuderte, bevorzugt elektrisch isolierende Kühlflüssigkeit in Richtung und bevorzugt auch auf die Statorwickelköpfe geleitet werden kann und dort den Stator über den "Hotspot Statorwickelkopf" kühlen kann. Der Statorwickelkopf besteht typischerweise aus einer Kupferwicklung und besitzt damit eine besonders hohe Wärmeleitfähigkeit. Die erfindungsgemäße elektrische Maschine kann beispielsweise mit einem Öl oder einem Ölnebel als Kühlmittel gekühlt werden, und neben einem von dem Kühlmittel durchströmten Wärmetauscher eine direkte Kühlung insbesondere der Wellenzapfen, der Kurzschlussringe des Rotors und der Statorwickelköpfe des Stators der Asynchronmaschine aufweisen.

Im Folgenden werden Ausführungsbeispiele der Erfindung anhand der schematischen Zeichnung näher erläutert, wobei gleiche oder ähnliche Elemente mit gleichen Bezugszeichen versehen sind. Hierbei zeigt
- Fig. 1: eine Längsschnittdarstellung eines Ausführungsbeispiels eines erfindungsgemäßen Rotors mit zwei Wellenzapfen und einem Füllkörper,
- Fig. 2: eine Längsschnittdarstellung eines weiteren Ausführungsbeispiels eines erfindungsgemäßen Rotors mit Wellenzapfen, die einteilig mit einem Füllkörper ausgebildet sind,
- Fig. 3: eine Längsschnittdarstellung eines weiteren Ausführungsbeispiels eines erfindungsgemäßen Rotors mit zwei Wellenzapfen, einem Füllkörper und einem Medienkanalelement,
- Fig. 4: eine Längsschnittdarstellung eines weiteren Ausführungsbeispiels eines erfindungsgemäßen Rotors mit zwei Wellenzapfen, einem Füllkörper und einem Medienkanalelement, die einteilig miteinander verbunden sind,
- Fig. 5: eine Längsschnittdarstellung eines weiteren Ausführungsbeispiels eines erfindungsgemäßen Rotors mit radialen Kühlkanälen,
- Fig. 6: eine alternative Längsschnittdarstellung des Rotors nach Fig. 5,
- Fig. 7: eine weitere alternative Längsschnittdarstellung des Rotors nach Fig. 5,
- Fig. 8: eine Querschnittsdarstellung des Rotors nach Fig. 5 durch dessen Medienkanalelement,
- Fig. 9: eine perspektivische Ansicht einer momentübertragenden Verbindung zwischen einem Füllkörper und einem ersten Wellenzapfen des Rotors nach Fig. 5
- Fig. 10: eine perspektivische Ansicht des Rotors nach Fig. 5.
- Fig. 11: eine vergrößerte Detailansicht aus Fig. 10,
- Fig. 12: eine Längsschnittdarstellung eines weiteren Ausführungsbeispiels eines erfindungsgemäßen Rotors mit radialen Kühlkanälen und mit einer Endscheibe,
- Fig. 13: eine Längsschnittdarstellung eines Ausführungsbeispiels einer erfindungsgemäßen elektrischen Maschine, und
- Fig. 14: eine Längsschnittdarstellung einer weiteren elektrischen Maschine.

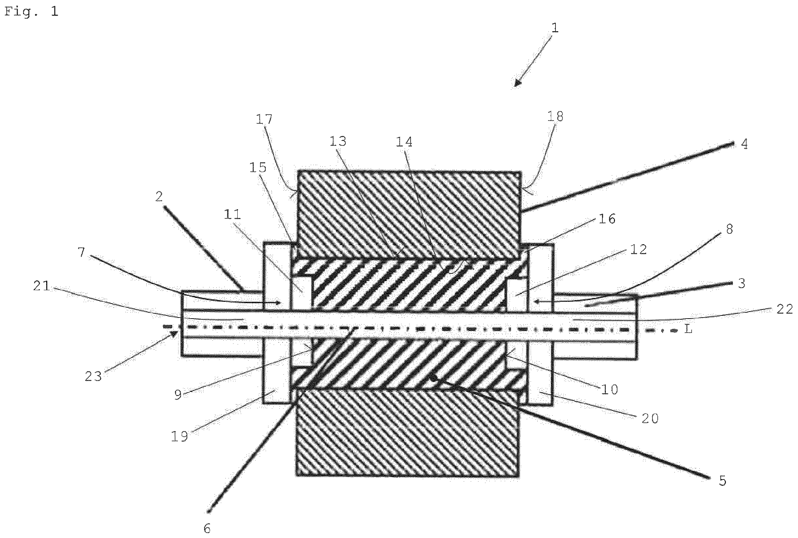

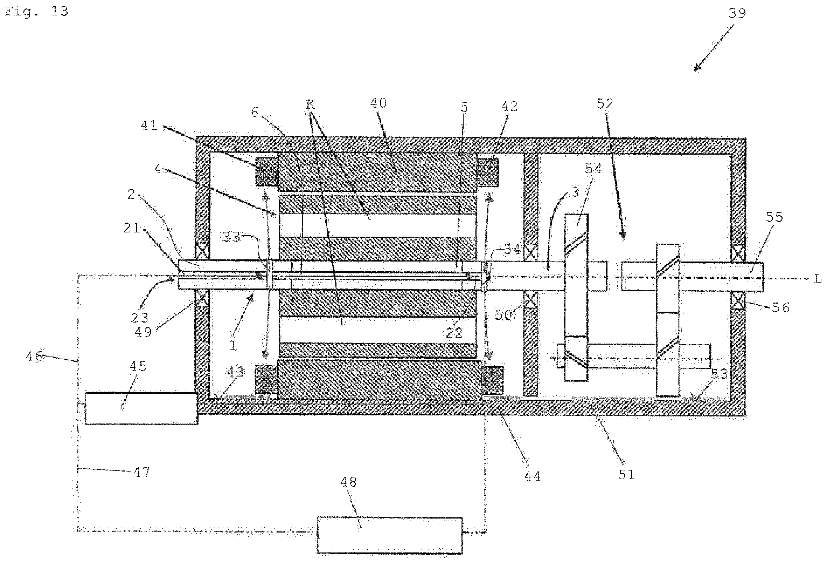

Fig. 1 zeigt einen Rotor 1 für eine elektrische Maschine, z.B. eine elektrische Maschine 39 gemäß Fig. 13.
Der Rotor 1 umfasst einen ersten Wellenzapfen 2, einen zweiten Wellenzapfen 3, ein Rotorblechpaket 4 und einen Füllkörper 5. Der Füllkörper 5 ist an das Rotorblechpaket 4 angegossen und derartig mit dem Rotorblechpaket 4 verbunden, z.B. formschlüssig, dass der Füllkörper 5 und das Rotorblechpaket 4 drehfest miteinander verbunden sind. Somit kann ein Drehmoment von dem Füllkörper 5 auf das Rotorblechpaket 4 übertragen werden und umgekehrt. Insbesondere kann eine Rotationsbewegung des Füllkörpers 5 um eine Längsachse L des Rotors 1 auf das Rotorblechpaket 4 übertragen werden, sodass sich auch das Rotorblechpaket 4 um die Längsachse L dreht. Der Füllkörper 5 ist im Wesentlichen von hohlzylindrischer Gestalt und weist einen ringförmigen Querschnitt auf. Eine zentrale Bohrung 6 durchsetzt den Füllkörper 5 von einer in Fig. 1 links dargestellten ersten Stirnseite 7 des Füllkörpers 5 bis zu einer in Fig. 1 rechts dargestellten zweiten Stirnseite 8 des Füllkörpers 5.

Die erste Stirnseite 7 weist eine erste Ausnehmung 9 auf, und die zweite Stirnseite 8 weist eine zweite Ausnehmung 10 auf. Der erste Wellenzapfen 2 weist an seinem in Fig. 1 rechts dargestellten stirnseitigen Ende einen ersten Zentrierring 11 auf, und der zweite Wellenzapfen 3 weist an seinem in Fig. 1 links dargestellten stirnseitigen Ende einen zweiten Zentrierring 12 auf. Die Form des ersten Zentrierrings 11 korrespondiert mit der Form der ersten Ausnehmung 9, und die Form des zweiten Zentrierrings 12 korrespondiert mit der Form der zweiten Ausnehmung 10. In dem durch Fig. 1 gezeigten Ausführungsbeispiel weisen die Zentrierringe 11 und 12 jeweils einen ringförmigen und zylindrischen Querschnitt mit einem Außendurchmesser auf, welcher einem Innendurchmesser der scheibenförmigen Ausnehmung 9 bzw. 10 entspricht.

Der erste Zentrierring 11 ist in die erste Ausnehmung 9 gesteckt, und der zweite Zentrierring 12 ist in die zweite Ausnehmung 10 gesteckt. Auf diese Weise ist der erste Wellenzapfen 2 mittels der ersten Ausnehmung 9 und dem ersten Zentrierring 11 bezüglich des Füllkörpers 5 ausgerichtet, wobei eine Längsachse L des ersten Wellenzapfens 2 einer Längsachse L des Füllkörpers 5 entspricht. Der erste Wellenzapfen 2 und der Füllkörper 5 sind zu der Längsachse L achsensymmetrisch aufgebaut. Auf ähnliche Weise ist der zweite Wellenzapfen 3 mittels der zweiten Ausnehmung 10 und dem zweiten Zentrierring 12 bezüglich des Füllkörpers 5 ausgerichtet, wobei eine Längsachse L des zweiten Wellenzapfens 3 ebenfalls der Längsachse L des Füllkörpers 5 entspricht und der zweite Wellenzapfen 3 zu der Längsachse L achsensymmetrisch aufgebaut ist.

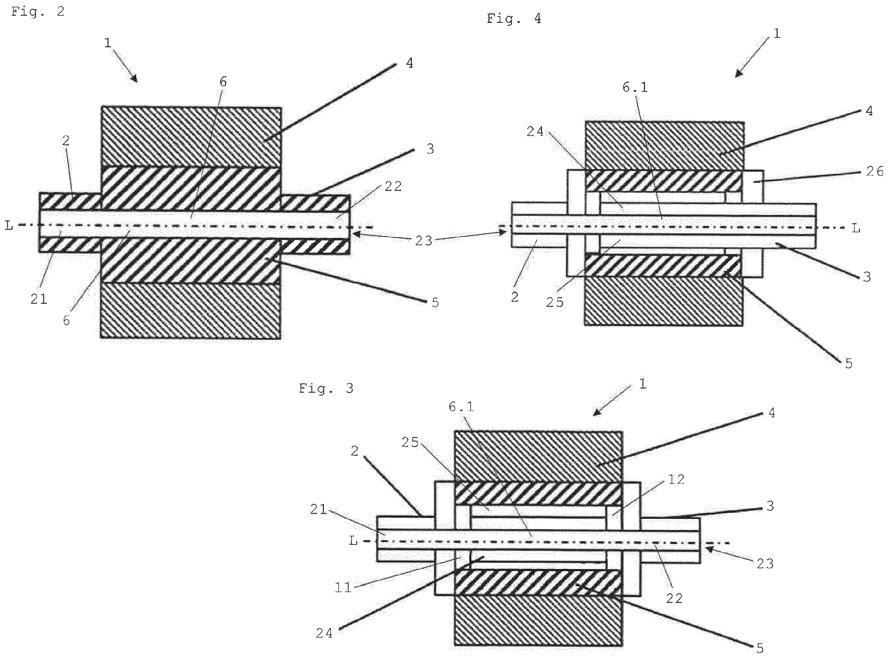

Der Füllkörper 5 weist an seinem Außenumfang eine dritte Ausnehmung 13 auf, welche sich über einen großen Bereich des Außenumfangs erstreckt. Eine zentrale Bohrung 14 des Rotorblechpakets 4 korrespondiert mit der dritten Ausnehmung 13, wobei insbesondere ein Innendurchmesser der zentralen Bohrung 14 und ein Außendurchmesser der dritten Ausnehmung 13 derart aufeinander abgestimmt sein können, dass zwischen dem Füllkörper 5 und dem Rotorblechpaket eine kraftschlüssige Welle-Nabe-Verbindung geschaffen wird. Die dritte Ausnehmung 13 wird in der Längsrichtung L durch zwei radial verlaufende Endabschnitte 15 und 16 begrenzt. Das Rotorblechpaket 4 weist eine in Fig. 1 links dargestellte erste Stirnseite 17 und eine in Fig. 1 rechts dargestellte zweite Stirnseite 18 auf. Der Füllkörper 5 ist derart mit seinen Endabschnitten 15 und 16 an die Stirnseiten 17 und 18 des Rotorblechpaket 4 angegossen, dass die einzelnen Bleche des Rotorblechpaket 4 durch die Endabschnitte 15 und 16 axial aneinander gepresst werden (Kraftschluss), zumindest aber axial zusammengehalten werden (Formschluss). Auf diese Weise können die Endabschnitte 15 und 16 das Rotorblechpaket 4 zusammenhalten oder verklemmen, d.h. sie erfüllen eine Art "Klammer-Funktion" für das Rotorblechpaket 4, welches durch die Endabschnitte 15 und 16 in der Längsrichtung L zusammengehalten wird. Alternativ können die abstehenden Endabschnitte 15 und 16 weggelassen werden, wodurch die optionale "Klammer-Funktion" entfällt (vgl. Fig. 3).

Der erste Wellenzapfen 2 ist formschlüssig und drehfest mit dem Füllkörper 5 verbunden, und der zweite Wellenzapfen 3 ist ebenfalls formschlüssig und drehfest mit dem Füllkörper 5 verbunden. Die Verbindung zwischen den Wellenzapfen 2 bzw. 3 und dem Füllkörper 5 kann beispielsweise mittels einer nicht durch Fig. 1 gezeigten Schraubenverbindung, einer Ausnehmung und eines Arretierstifts oder mittels einer Mitnehmernut und eines Mitnehmerzapfens erfolgen. Gemäß dem durch Fig. 1 gezeigten Ausführungsbeispiel weist der erste Wellenzapfen 2 dazu einen ersten Anschraubflansch bzw. einen ersten Befestigungsring 19 auf, und der zweite Wellenzapfen 3 weist einen zweiten Anschraubflansch bzw. einen zweiten Befestigungsring 20 auf. Die Befestigungsringe 19 und 20 sind von zylindrischer Gestalt und weisen einen ringförmigen Querschnitt auf, wobei ein Außendurchmesser der Befestigungsringe 19 und 20 jeweils größer ist als der Außendurchmesser der Zentrierringe 11 und 12. Die Befestigungsringe 19 und 20 liegen jeweils mit einer ihrer Stirnseiten an einer der Stirnseiten 7 bzw. 8 des Füllkörpers 5 an. Im Bereich dieser Anlageflächen können die Wellenzapfen 2 und 3 mit dem Füllkörper 5 beispielsweise verschraubt sein. Durch die drehfeste Verbindung zwischen dem Füllkörper 5 und dem ersten Wellenzapfen 2 einerseits sowie den zweiten Wellenzapfen 3 andererseits können Drehmomente zwischen den Wellenzapfen 2 und 3 und dem Füllkörper 5 übertragen werden. Insbesondere kann eine Rotationsbewegung des ersten Wellenzapfens 2 und/oder des zweiten Wellenzapfens 3 auf den Füllkörper 5 übertragen werden. Durch die drehfeste Verbindung zwischen dem Füllkörper 5 und dem Rotorblechpaket 4 (siehe oben) können auch Rotationsbewegungen und Drehmomente von dem Füllkörper 5 auf das Rotorblechpaket 4 übertragen werden. Folglich können Rotationsbewegungen und Drehmomente von dem ersten Wellenzapfen 2 und/oder dem zweiten Wellenzapfen 3 über den Füllkörper 5 auf das Rotorblechpaket 4 übertragen werden.

Der erste Wellenzapfen 2 weist eine zentrale erste Bohrung 21 auf, und der zweite Wellenzapfen 3 weist eine zentrale zweite Bohrung 22 auf. Die Bohrungen 21 und 22 durchsetzen die Wellenzapfen 2 und 3 derart in der Längsrichtung L, dass die Bohrungen 21 und 22 entgegengesetzte Stirnseiten der Wellenzapfen 2 bzw. 3 miteinander verbinden. Dabei fluchten die Bohrungen 21 und 22 der Wellenzapfen 2 und 3 mit der zentralen Bohrung 6 ("dritte Bohrung") des Füllkörpers 5. Somit sind die Bohrungen 21 und 22 der Wellenzapfen 2 und 3 mit der zentralen Bohrung 6 des Füllkörpers 5 verbunden, wodurch ein Kühlkanal 23 ausgebildet wird, welcher in der Längsrichtung L durch den gesamten Kurzschlussring 1 verläuft. Durch den Kühlkanal 23 kann insbesondere eine Kühlflüssigkeit, z.B. ein Öl oder ein Ölnebel, geleitet werden, wodurch die Wellenzapfen 2 und 3 und der Füllkörper 5 von innen gekühlt werden können.

Fig. 2 zeigt einen Rotor 1 für eine elektrische Maschine. Der Rotor 1 umfasst einen ersten Wellenzapfen 2, einen zweiten Wellenzapfen 3, einen Füllkörper 5 und einen Rotorblechpaket 4. In dem durch Fig. 2 gezeigten Ausführungsbeispiel sind der erste Wellenzapfen 2, der zweite Wellenzapfen 3 und der Füllkörper 5 einteilig ausgeführt. Ein Kühlkanal 23 ist ähnlich ausgeführt wie in dem Ausführungsbeispiel nach Fig. 1. Der Kühlkanal 23 setzt sich aus einer ersten axialen Bohrung 21 des ersten Wellenzapfens 2, einer zweiten axialen Bohrung 22 des zweiten Wellenzapfens 3 und einer dritten Bohrung 6 des Füllkörpers 5 zusammen und durchdringt die aus den Wellenzapfen 2, 3 und dem Füllkörper 5 gebildete Rotorwelle in axialer Richtung L vollständig.

Fig. 3 zeigt einen weiteren Rotor 1 für eine elektrische Maschine. Der Rotor 1 nach Fig. 3 ist ähnlich zu dem Rotor 1 nach Fig. 1 ausgeführt. Insbesondere sind ein erster Wellenzapfen 2, ein zweite Wellenzapfen 3 und ein Rotorblechpaket 4 des Rotors 1 identisch ausgeführt wie durch Fig. 1 gezeigt.

Ein Füllkörper 5 des Rotors 1 ist jedoch im Gegensatz zu dem Ausführungsbeispiel nach Fig. 1 in einem Bereich zwischen dem ersten Zentrierring 11 und dem zweiten Zentrierring 12 ausgespart ausgeführt. Mit anderen Worten weist der Füllkörper 5 zwischen den Zentrierringen 11 und 12 keine Masse auf. Zwischen den Zentrierringen 11 und 12 befindet sich in dem massefreien Raum des Füllkörpers 5 ein Medienkanalelement 24, welches eine vierte zentrale axiale Bohrung 6.1 aufweist. Diese axiale Bohrung 6.1 ist mit einer ersten axialen Bohrung 21 des ersten Wellenzapfens 2 und mit einer zweiten axialen Bohrung 22 des zweiten Wellenzapfens 3 derart verbunden, dass ein Kühlkanal 23 entsteht. Der Füllkörper 5 und das Medienkanalelement 24 bilden zwischen sich einen mantelförmigen Hohlraum 25 aus, durch welchen die Masse des Rotors 1 reduziert werden kann, und durch welchen insbesondere ein Kühlmedium zur Kühlung von Komponenten des Rotors 1 geleitet werden können. Der erste Wellenzapfen 2 oder der zweite Wellenzapfen 3 kann weiterhin einteilig mit dem Medienkanalelement 24 ausgebildet sein.

Das durch Fig. 4 gezeigte weitere Ausführungsbeispiel eines weiteren Rotors 1 für eine elektrische Maschine unterscheidet sich von dem Rotor 1 nach Fig. 3 durch die Ausgestaltung der Wellenzapfen 2, 3 und des Medienkanalelements 24. Der erste Wellenzapfen 2, der zweite Wellenzapfen 3 und das Medienkanalelement 24 sind einteilig ausgebildet, wobei eine Endscheibe 26 auf den zweiten Wellenzapfen 3 aufgeschoben und fest mit dem Füllkörper 5 verbunden ist.

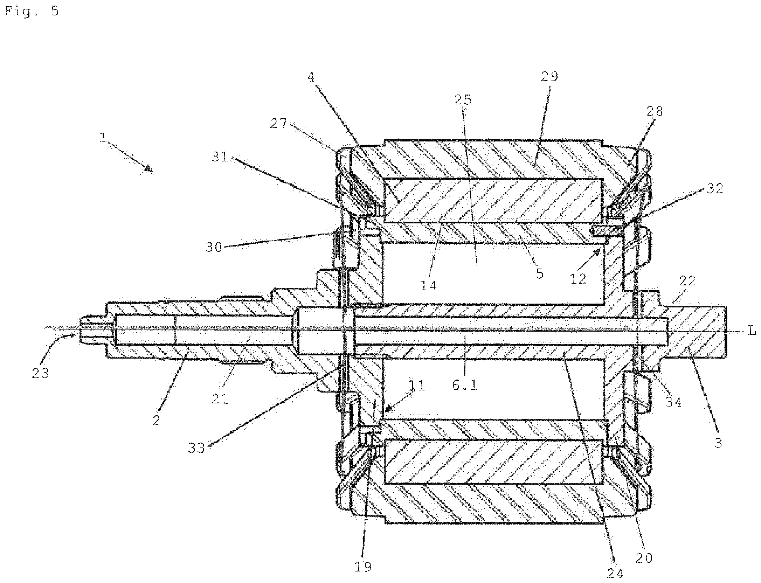

Fig. 5 zeigt, wie ein Rotor 1 im Detail ausgestattet sein kann. Der Füllkörper 5 füllt nicht den gesamten Hohlraum innerhalb einer zentralen Bohrung 14 des Rotorblechpakets 4 aus, sondern bildet zwischen sich und einem Medienkanalelement 24 einen Hohlraum 25 aus.

Der Rotor 1 umfasst einen ersten Kurzschlussring 27 an einer ersten Stirnseite und einen zweiten Kurzschlussring 28 an einer zweiten Stirnseite. Die Kurzschlussringe 27 und 28 sind über mehrere Kurzschlussstäbe 29 miteinander verbunden, welche in Nuten des Rotorblechpakets 4 aufgenommen sind. Die Nuten bzw. die Kurzschlussstäbe 29 verlaufen parallel zueinander und parallel zu der Längsachse L. Weiterhin sind die Kurzschlussstäbe 29 in einer Umfangsrichtung des Rotorblechpakets 4 jeweils äquidistant voneinander beabstandet.

Der Rotor 1 umfasst einen ersten Wellenzapfen 2, welcher einen ersten Befestigungsring 19 mit mehreren in Umfangsrichtung verteilt angeordneten Mitnehmernuten 30 aufweist, in welche jeweils ein Mitnehmerzapfen 31 des Füllkörpers 5 hineinragt. Dadurch sind der erste Wellenzapfen 2 und der Füllkörper 5 in Umfangsrichtung des Rotors 1 formschlüssig drehfest miteinander verbunden. Ein zweiter Wellenzapfen 3 weist einen zweiten Befestigungsring 20 auf, welcher mittels eines Arretierstifts 32 an dem Füllkörper befestigt ist.

Der erste Wellenzapfen 2 weist mehrere in Umfangsrichtung verteilte erste radiale Bohrungen 33 auf, und der zweite Wellenzapfen 3 weist mehrere in Umfangsrichtung verteilte zweite radiale Bohrungen 34 auf. Die radialen Bohrungen 33 und 34 verlaufen senkrecht zu der Längsachse L des Rotors 1, wobei die ersten radialen Bohrungen 33 eine erste axiale Bohrung 21 des ersten Wellenzapfens 2 mit einer ersten Außenumfangsfläche des ersten Wellenzapfens 2 verbinden, und die zweiten radialen Bohrungen 34 eine zweite axiale Bohrung 22 des zweiten Wellenzapfens 3 mit einer zweiten Außenumfangsfläche des zweiten Wellenzapfens 3 verbinden. Die erste axiale Bohrung 21 und die zweite axiale Bohrung 22 sind mit einer vierten axialen Bohrung 6.1 innerhalb des Füllkörpers 5 verbunden und bilden gemeinsam einen Abschnitt eines Kühlkanals 23 aus, welcher weiterhin die radialen Bohrungen 33 und 34 umfasst.

In dem durch Fig. 5 gezeigten Ausführungsbeispiel ist der zweite Wellenzapfen 3 einteilig mit dem Medienkanalelement 24 ausgebildet. Mit anderen Worten ist das Medienkanal mit 24 in den zweiten Wellenzapfen 3 integriert. Der erste Wellenzapfen 2 ist kraftschlüssig auf das Medienkanalelement 24 aufgeschrumpft.

Durch den Kühlkanal 23 kann ein Kühlmedium, z.B. ein Öl oder ein Ölnebel, geleitet werden. Eine mögliche Fließrichtung des Kühlmediums innerhalb des Kühlkanals 23 ist in Fig. 5 durch Pfeile veranschaulicht. Das Kühlmedium kann beispielsweise mittels einer nicht gezeigten Pumpe durch den Kühlkanal 23 gefördert werden. Alternativ kann das Rotorblechpaket 4 schraubenspindelförmige Kühlkanäle aufweisen, welche bei einer Rotation des Rotorblechpakets 4 eine Sogwirkung ermöglichen, mittels welcher das Kühlmedium ohne die Notwendigkeit einer Pumpe in den Kühlkanal 23 angesaugt, durch ihn geleitet und aus ihm heraus gefördert wird.

Bei einer Rotation des ersten Wellenzapfens 2 und des zweiten Wellenzapfens 3 wird das Kühlmedium, welches sich innerhalb des Kühlkanals 23 befindet, durch auf das Kühlmedium innerhalb der radialen Bohrungen 33 und 34 wirkende Fliehkräfte durch die radialen Bohrungen 33 und 34 gefördert und aus ihnen in radialer Richtung herausgeschleudert. Die erste radiale Bohrung 33 des ersten Wellenzapfens 2 ist in radialer Richtung von dem ersten Kurzschluss 27 umgeben, und die zweite radiale Bohrung 34 des zweiten Wellenzapfens 3 ist in radialer Richtung von dem zweiten Kurzschluss 28 umgeben. Das aus den radialen Bohrungen 33 und 34 herausgeschleuderte Kühlmedium trifft in seinem weiteren Bewegungsverlauf auf den ersten Kurzschlussring 27 bzw. zweiten Kurzschlussring 28 und kühlt diese.

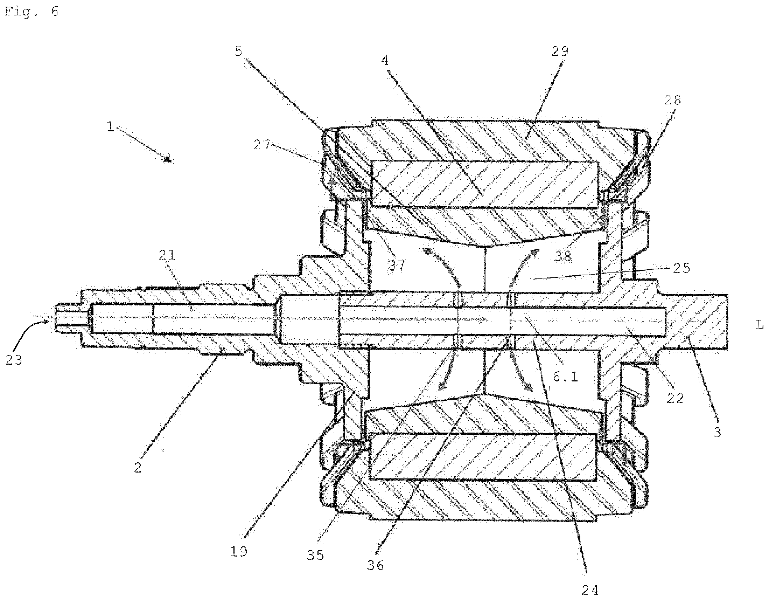

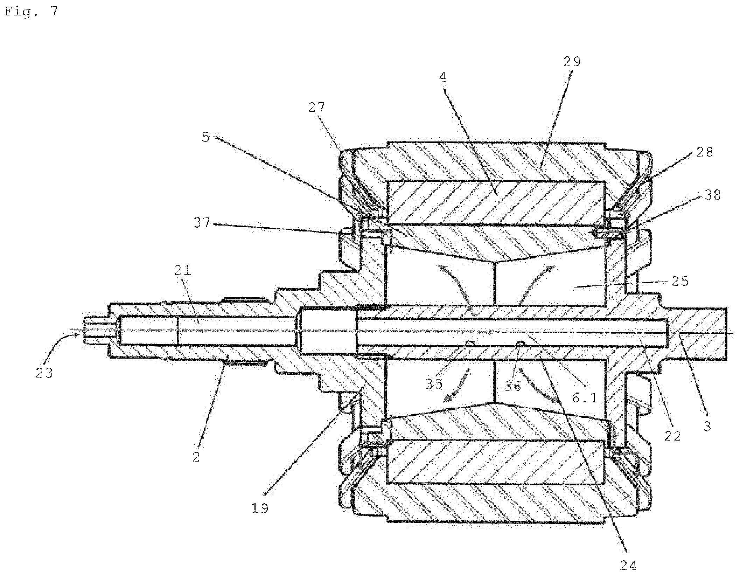

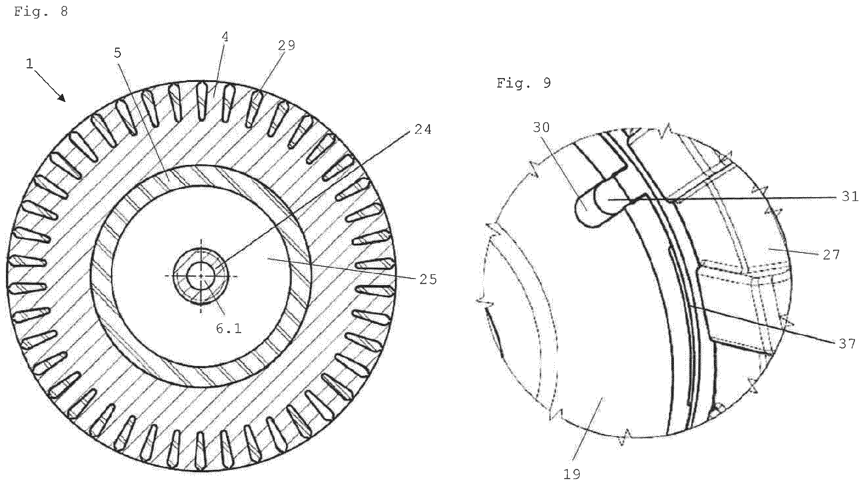

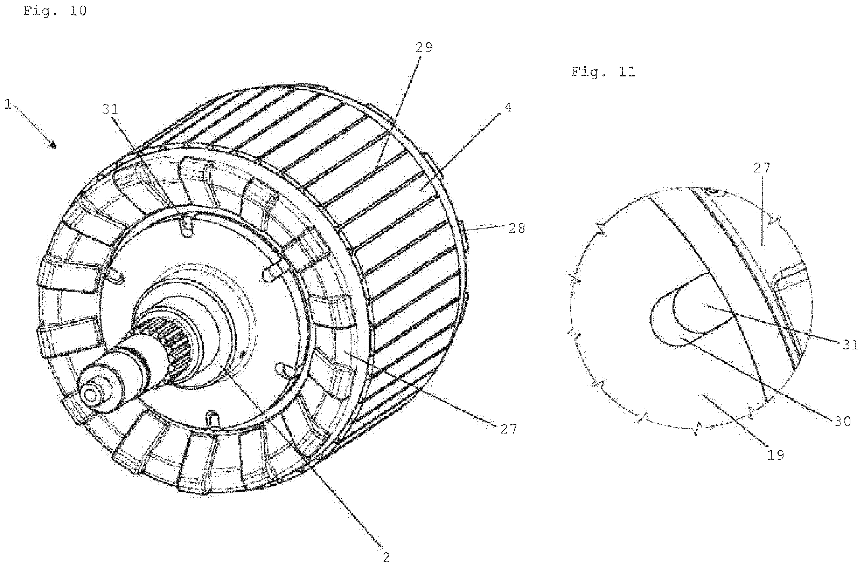

Fig. 6 und 7 zeigen, dass der Rotor 1 nach Fig. 5 eine dritte radiale Bohrung 35 und eine vierte radiale Bohrung 36 aufweist. Die dritte radiale Bohrung 35 und die vierte radiale Bohrung 36 verbinden die vierte axiale Bohrung 6.1 mit dem mantelförmigen Hohlraum 25 zwischen dem Füllkörper 5 und dem Medienkanalelement 24. Der erste Wellenzapfen 2 und der Füllkörper 5 bilden zwischen sich eine erste Passage 37 aus, welche den mantelförmigen Hohlraum 25 mit dem ersten Kurzschlussring 27 verbindet. Auf ähnliche Weise bilden der zweite Wellenzapfen 3 und der Füllkörper zwischen sich eine zweite Passage 38 aus, welche den mantelförmigen Hohlraum 25 mit dem zweiten Kurzschlussring 28 verbindet. Mögliche Fließrichtungen von Kühlmedium durch den Kühlkanal 23, den Hohlraum 25 und die Passagen 37 und 38 zu den Kurzschlussringen 27 und 28 sind in Fig. 6 und 7 durch Pfeile veranschaulicht. Fig. 8 bis 11 zeigen detaillierte Ansichten von vorstehend beschriebenen Details des Rotors nach Fig. 5.

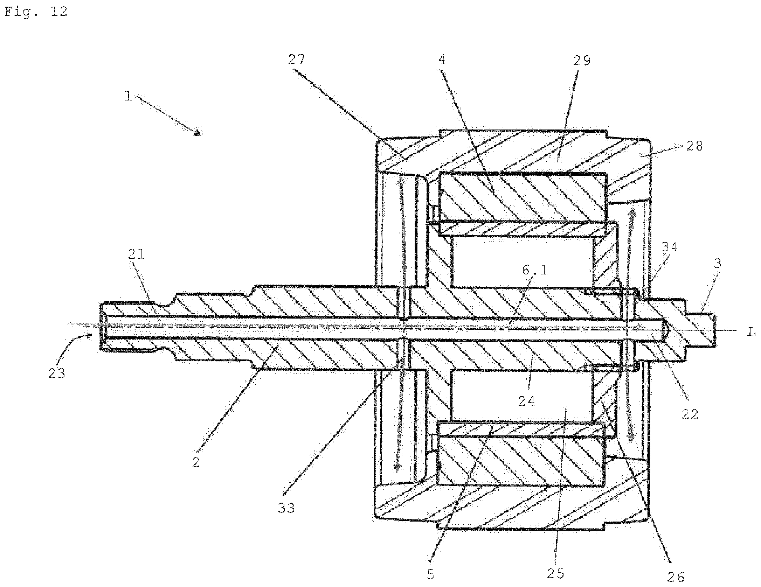

Fig. 12 zeigt einen weiteren Rotor 1 für eine elektrische Maschine, wobei - ähnlich wie in dem Ausführungsbeispiel nach Fig. 4 - ein erster Wellenzapfen 2, ein zweiter Wellenzapfen 3 und ein Medienkanalelement 24 einteilig ausgebildet sind, wobei eine Endscheibe 26 auf den zweiten Wellenzapfen 3 aufgeschoben und fest mit einem Füllkörper 5 verbunden ist. Weiterhin umfasst ein Kühlkanal 23 eine erste axiale Bohrung 21 innerhalb eines ersten Wellenzapfens 2, eine zweite axiale Bohrung 22 innerhalb eines zweiten Wellenzapfens 3, eine vierte axiale Bohrung 6.1 innerhalb des Medienkanalelements 24 sowie eine erste radiale Bohrung 33 innerhalb des ersten Wellenzapfens 2 und eine zweite radiale Bohrung 34 innerhalb des zweiten Wellenzapfens 3.
Mögliche Fließrichtungen von Kühlmedium durch den Kühlkanal 23 zu den Kurzschlussringen 27 und 28 sind in Fig. 8 durch Pfeile veranschaulicht.

Fig. 13 zeigt eine elektrische Maschine 39 mit einem Rotor 1, welcher ähnlich aufgebaut sein kann wie die Rotoren 1 nach Fig. 1 bis 12. Der Rotor 1 ist in radialer Richtung umgeben von einem Stator 40 mit einem ersten Statorwickelkopf 41, welcher in Fig. 13 links dargestellt ist, und mit einem zweiten Statorwickelkopf 42, welcher in Fig. 13 rechts dargestellt ist. Die Statorwickelköpfe 41 und 42 umgeben jeweils einen nicht durch Fig. 13 gezeigten Kurzschlussring des Rotors 1 (vgl. hierzu z.B. Fig. 5) . Das Rotorblechpaket 4 des Rotors 1 umfasst weiterhin eingestanzte Kühlkanäle K.

Ein erster Wellenzapfen 2 des Rotors 1 weist mehrere in Umfangsrichtung verteilte radiale erste Bohrungen 33 auf. Ein zweiter Wellenzapfen 3 des Kurzschlussläufers 1 weist ebenfalls mehrere in Umfangsrichtung verteilte zweite radiale Bohrungen 34 auf. Der erste Statorwickelkopf 41 umgibt die radialen ersten Bohrungen 33 in radialer Richtung, und der zweite Statorwickelkopf 42 umgibt die radialen zweiten Bohrungen 34. Bei einer Rotation des ersten Wellenzapfens 2, des Füllkörpers 5 sowie des zweiten Wellenzapfens 3 wird - wie im Zusammenhang mit Fig. 5 beschrieben - Kühlmedium, welches sich innerhalb eines Kühlkanals 23 des Rotors 1 befindet, durch den Kühlkanal 23 gefördert und aus den radialen Bohrungen 33 und 34 heraus in Richtung der Statorwickelköpfe 41 und 42 geschleudert. Das aus den radialen Bohrungen 33 und 34 herausgeschleuderte Kühlmedium trifft in seinem weiteren Bewegungsverlauf insbesondere auf die Statorwickelköpfe 41 und 42 und kühlt diese. Anschließend tropft das Kühlmedium in einen Sumpf 43 eines ersten Gehäuseabschnitts 44 der elektrischen Maschine 1 ab.

Das Kühlmedium, welches durch den Kühlkanal 23 geleitet wird und nach einer Kühlung insbesondere der Statorwickelköpfe 41 und 42 in den Sumpf 43 abgetropft ist, kann durch einen Wärmetauscher 45 geleitet werden, um dort rückgekühlt zu werden. Eine Förderung des Kühlmediums aus dem Sumpf 43 durch den Wärmetauscher 45 und durch den Kühlkanal 23 kann mittels einer nicht gezeigten Pumpe erfolgen oder durch spiralförmige Kühlkanäle innerhalb des Rotorblechpakets 4. Auf diese Weise wird ein Umlauf-Kühlkreislauf 46 gebildet, dessen möglicher Verlauf in Fig. 13 mit einer Strichpunkt-Linie verdeutlicht ist. Zur Rückkühlung des Kühlmediums innerhalb des Wärmetauschers 45 wird dieser durch Kühlwasser durchströmt, welches in einem Haupt-Kühlkreislauf 47 zirkuliert, innerhalb welchem sich ein Hauptwasserkühler 48 zur Rückkühlung des Kühlwassers befindet. Das Kühlwasser kann innerhalb des Haupt-Kühlkreislaufs 47 mittels einer nicht gezeigten Pumpe zirkulieren.

Fig. 13 zeigt weiterhin, dass der erste Wellenzapfen 2 drehbar in einem ersten Lager 49 gelagert ist, welches innerhalb des ersten Gehäuseabschnitts 44 befestigt ist, und dass der zweite Wellenzapfen 3 drehbar in einem zweiten Lager 50 gelagert ist, welches ebenfalls innerhalb des ersten Gehäuseabschnitts 44 befestigt ist. In einem zweiten Gehäuseabschnitt 51 befindet sich ein Getriebe 52 mit einem weiteren Sumpf 53. Das Getriebe 52 ist über ein erstes Zahnrad 54 mit dem zweiten Wellenzapfen 3 verbunden, wobei eine Ausgangswelle 55 des Getriebes 52 in einem dritten Lager 56 drehbar gelagert ist und aus dem zweiten Gehäuseabschnitt herausragt, wobei das dritte Lager 56 innerhalb des zweiten Gehäuseabschnitts 51 befestigt ist.

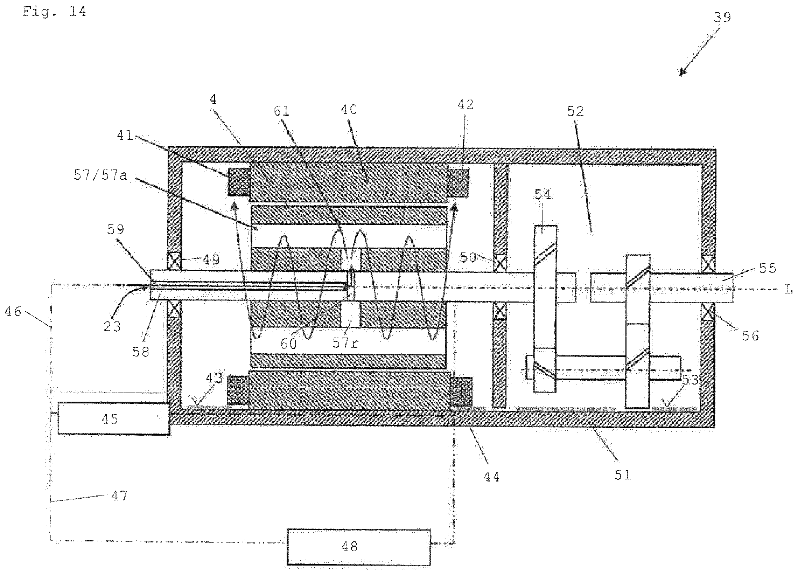

Fig. 14 zeigt eine weitere elektrische Maschine 1 mit einem Rotorblechpaket 4. Das Rotorblechpaket 2 ist in radialer Richtung umgeben von einem Stator 40 mit einem ersten Statorwickelkopf 41, welcher in Fig. 14 links dargestellt ist, und mit einem zweiten Statorwickelkopf 42, welcher in Fig. 14 rechts dargestellt ist. Das Rotorblechpaket 4 umfasst weiterhin Kühlkanäle 57, welche das Rotorblechpaket 4 in axialer Richtung L und in radialer Richtung durchsetzen und dazu axiale Kühlkanalabschnitte 57a und radiale Kühlkanalabschnitte 57r aufweisen. Eine Rotorwelle 58 der elektrischen Maschine 1 ist als Hohlwelle ausgeführt und weist eine in axialer Richtung bzw. Längsrichtung L der Rotorwelle 58 verlaufende axiale Bohrung 59 auf. Die axiale Bohrung 59 beginnt an einer in Fig. 14 links dargestellten ersten Stirnseite der Rotorwelle 58. Die axiale Bohrung 59 durchdringt die Rotorwelle 58 in etwa bis zu ihrer Hälfte und geht dann in mehrere um den Umfang der Rotorwelle 58 verteilte radiale Bohrungen 60 über, welche die axiale Bohrung 59 mit einer äußeren Mantelfläche der Rotorwelle 58 verbinden und in die radialen Kühlkanalabschnitte 57r des Rotorblechpakets 4 münden.

Bei einer Rotation der Rotorwelle 58 wird ein Kühlmedium, welches sich innerhalb der axialen Bohrung 59 der Rotorwelle 58 befindet, durch die axiale Bohrung 59 gefördert und aus den radialen Bohrungen 60 heraus in die radialen Kühlkanalabschnitte 57r des Rotorblechpakets 4 geleitet bzw. geschleudert. Von da aus durchströmt das Kühlmedium die axialen Kühlkanalabschnitte 57a des Rotorblechpakets 4 bis zu dessen Stirnseiten, von wo aus es in Richtung der Statorwickelköpfe 41 und 42 geschleudert wird und in seinem weiteren Bewegungsverlauf insbesondere auf die Statorwickelköpfe 41, 42 geschleudert wird und diese kühlt. Anschließend tropft das Kühlmedium in einen Sumpf 43 eines ersten Gehäuseabschnitts 44 der elektrischen Maschine 39 ab. Ein möglicher Verlauf des Kühlmittels innerhalb der Bohrungen 60 der Rotorwelle 58 und der Kühlkanalabschnitte 57r, 57a ist in Fig. 14 mit Pfeilen 61 verdeutlicht. Die restlichen Elemente aus Fig. 14 entsprechen denen des Ausführungsbeispiels nach Fig. 13.

## Patentansprüche

1. Rotor (1) für eine elektrische Maschine (39), der Rotor (1) umfassend einen ersten Wellenzapfen (2), einen zweiten Wellenzapfen (3), ein Rotorblechpaket (4) und einen Füllkörper (5), wobei
- der Füllkörper (5) an das Rotorblechpaket (4) angegossen ist, sodass das Rotorblechpaket (4) drehfest auf dem Füllkörper (5) gelagert ist,
- der Füllkörper (5) drehfest mit den Wellenzapfen (2, 3) verbunden ist, sodass ein Drehmoment von den Wellenzapfen (2, 3) auf das Rotorblechpaket (4) übertragen wird, **dadurch gekennzeichnet, dass**
- ein Kühlkanal (23) die Wellenzapfen (2, 3) und den Füllkörper (5) in axialer Richtung (L) des Rotors (1) durchsetzt, wobei
- wenigstens einer der Wellenzapfen (2, 3) eine stirnseitig angeordnete Endscheibe (19, 20) zur Befestigung mit dem Füllkörper (5) aufweist.

2. Rotor (1) nach Anspruch 1, wobei
- der erste Wellenzapfen (2) eine erste axiale Bohrung (21) aufweist,
- der zweite Wellenzapfen (3) eine zweite axiale Bohrung (22 aufweist,
- der Füllkörper (5) eine dritte axiale Bohrung (6) aufweist, wobei die dritte axiale Bohrung (6) die erste axiale Bohrung (21) mit der zweiten axialen Bohrung (22) verbindet, sodass die erste Bohrung (21), die zweite Bohrung (22) und die dritte Bohrung (6) gemeinsam den Kühlkanal (23) ausbilden, welcher durch den ersten Wellenzapfen (2), den Füllkörper (5) und den zweiten Wellenzapfen (3) verläuft.

3. Rotor (1) nach Anspruch 1 oder 2, wobei der erste Wellenzapfen (2), der zweite Wellenzapfen (3) und der Füllkörper (5) einteilig ausgebildet sind.

4. Rotor (1) nach einem der vorstehenden Ansprüche, wobei das Rotorblechpaket (4) in axialer Richtung (L) formschlüssig und kraftschlüssig mit dem Füllkörper (5) verbunden ist.

5. Rotor (1) nach einem der vorstehenden Ansprüche, wobei wenigstens einer der Wellenzapfen (2, 3) einen stirnseitig angeordneten Ansatz (11, 12) zur Zentrierung aufweist.

6. Rotor nach Anspruch 1, der Rotor ferner umfassend ein Medienkanalelement (24), wobei
- der erste Wellenzapfen (2) eine erste axiale Bohrung (21) aufweist,
- der zweite Wellenzapfen (3) eine zweite axiale Bohrung (22 aufweist,
- das Medienkanalelement (24) zwischen den Wellenzapfen (2, 3) und dem Füllkörper (5) angeordnet ist,
- das Medienkanalelement (24) und der Füllkörper (5) zwischen sich einen mantelförmigen Hohlraum (25) ausbilden,
- das Medienkanalelement (24) eine vierte axiale Bohrung (6.1) aufweist, wobei die vierte axiale Bohrung (6.1) die erste Bohrung (21) des ersten Wellenzapfens (2) mit der zweiten Bohrung (22) des zweiten Wellenzapfens (3) verbindet, sodass die erste axiale Bohrung (21), die zweite axiale Bohrung (22) und die vierte axiale Bohrung (6.1) gemeinsam den Kühlkanal (23) ausbilden, welcher durch den ersten Wellenzapfen (2), den Füllkörper (5) und das Medienkanalelement (24) verläuft.

7. Rotor (1) nach Anspruch 6, wobei der erste Wellenzapfen (2) und/oder der zweite Wellenzapfen (3) einteilig mit dem Medienkanalelement (24) ausgebildet ist.

8. Rotor (1) nach einem der vorstehenden Ansprüche, der Rotor (1) weiterhin umfassend:
- einen ersten Kurschlussring (27) und
- einen zweiten Kurzschlussring (28),
wobei
- der erste Wellenzapfen (2) eine erste radiale Bohrung (33) aufweist, und
- der zweite Wellenzapfen (3) eine zweite radiale Bohrung (34) aufweist,
- die erste radiale Bohrung (33) mit der ersten axialen (21) Bohrung verbunden ist,
- die zweite radiale Bohrung (34) mit der zweiten axialen Bohrung (22) verbunden ist,
- der erste Kurzschlussring (27) die erste radiale Bohrung (33) radial umgibt, und
- der zweite Kurzschlussring (28) die zweite radiale Bohrung (34) radial umgibt, sodass bei einer Rotation der Wellenzapfen (2, 3) ein Kühlmedium aus den radialen Bohrungen (33, 34) radial nach außen in Richtung der Kurzschlussringe (27, 28) geschleudert werden kann und die Kurzschlussringe (27, 28) kühlen kann.

9. Rotor (1) nach einem der Ansprüche 6 oder 7, wobei
- das Medienkanalelement (24) eine dritte radiale Bohrung (35) und eine vierte radiale Bohrung (36) aufweist,
- die dritte radiale Bohrung (35) und die vierte radiale Bohrung (36) die vierte axiale Bohrung (6.1) mit dem mantelförmigen Hohlraum (25) verbinden,
- der erste Wellenzapfen (2) und der Füllkörper (5) zwischen sich eine erste Passage (37) ausbilden, welche den mantelförmigen Hohlraum (25) mit dem ersten Kurzschlussring (27) verbindet, und
- der zweite Wellenzapfen (3) und der Füllkörper (5) zwischen sich eine zweite Passage (38) ausbilden, welche den mantelförmigen Hohlraum (25) mit dem zweiten Kurzschlussring (28) verbindet.

10. Elektrische Maschine (39) umfassend
- einen Rotor (1) nach Anspruch 8 oder 9,
- einen Stator (40),
- einen ersten Statorwickelkopf (41), und
- einen zweiten Statorwickelkopf (42),
wobei
- der erste Statorwickelkopf (41) den ersten Kurzschlussring (27) umgibt, und
- der zweite Statorwickelkopf (42) den zweiten Kurzschlussring (28) umgibt,
sodass bei einer Rotation der Wellenzapfen (2, 3) ein Kühlmedium aus den radialen Bohrungen (33, 34) radial nach außen in Richtung der Statorwickelköpfe (41, 42) geschleudert werden kann und die Statorwickelköpfe (41, 42) kühlen kann.

## Claims

1. Rotor (1) for an electric machine (39), the rotor (1) comprising a first shaft journal (2), a second shaft journal (3), a laminated rotor core (4) and a filler body (5), wherein
- the filler body (5) is cast onto the laminated rotor core (4), so that the laminated rotor core (4) is mounted rotationally conjointly on the filler body (5),
- the filler body (5) is connected rotationally conjointly to the shaft journals (2, 3), so that a torque is transmitted from the shaft journals (2, 3) to the laminated rotor core (4), **characterized in that**
- a cooling duct (23) extends through the shaft journals (2, 3) and the filler body (5) in an axial direction (L) of the rotor (1), wherein
- at least one of the shaft journals (2, 3) has an end plate (19, 20), which is arranged on the end side, for fastening to the filler body (5).

2. Rotor (1) according to Claim 1, wherein
- the first shaft journal (2) has a first axial bore (21),
- the second shaft journal (3) has a second axial bore (22),
- the filler body (5) has a third axial bore (6),
wherein the third axial bore (6) connects the first axial bore (21) to the second axial bore (22), so that the first bore (21), the second bore (22) and the third bore (6) together form the cooling duct (23) which runs through the first shaft journal (2), the filler body (5) and the second shaft journal (3) .

3. Rotor (1) according to Claim 1 or 2, wherein the first shaft journal (2), the second shaft journal (3) and the filler body (5) are formed in one piece.

4. Rotor (1) according to any of the preceding claims, wherein the laminated rotor core (4) is connected to the filler body (5) in positively locking and non-positively locking fashion in the axial direction (L).

5. Rotor (1) according to any of the preceding claims, wherein at least one of the shaft journals (2, 3) has a projection (11, 12), which is arranged on the end side, for centring purposes.

6. Rotor according to Claim 1, the rotor furthermore comprising a media duct element (24), wherein
- the first shaft journal (2) has a first axial bore (21),
- the second shaft journal (3) has a second axial bore (22),
- the media duct element (24) is arranged between the shaft journals (2, 3) and the filler body (5),
- the media duct element (24) and the filler body (5) between them form a jacket-like cavity (25),
- the media duct element (24) has a fourth axial bore (6.1),
wherein the fourth axial bore (6.1) connects the first bore (21) of the first shaft journal (2) to the second bore (22) of the second shaft journal (3), so that the first axial bore (21), the second axial bore (22) and the fourth axial bore (6.1) together form the cooling duct (23) which runs through the first shaft journal (2), the filler body (5) and the media duct element (24).

7. Rotor (1) according to Claim 6, wherein the first shaft journal (2) and/or the second shaft journal (3) is formed in one piece with the media duct element (24).

8. Rotor (1) according to any of the preceding claims, the rotor (1) furthermore comprising:
- a first short-circuiting ring (27) and
- a second short-circuiting ring (28),
wherein
- the first shaft journal (2) has a first radial bore (33), and
- the second shaft journal (3) has a second radial bore (34),
- the first radial bore (33) is connected to the first axial bore (21),
- the second radial bore (34) is connected to the second axial bore (22),
- the first short-circuiting ring (27) radially surrounds the first radial bore (33), and
- the second short-circuiting ring (28) radially surrounds the second radial bore (34), so that, during a rotation of the shaft journals (2, 3), a cooling medium can be centrifuged out of the radial bores (33, 34) radially to the outside in the direction of the short-circuiting rings (27, 28) and can cool the short-circuiting rings (27, 28).

9. Rotor (1) according to either of Claims 6 and 7, wherein
- the media duct element (24) has a third radial bore (35) and a fourth radial bore (36),
- the third radial bore (35) and the fourth radial bore (36) connect the fourth axial bore (6.1) to the jacket-like cavity (25),
- the first shaft journal (2) and the filler body (5) between them form a first passage (37) which connects the jacket-like cavity (25) to the first short-circuiting ring (27), and
- the second shaft journal (3) and the filler body (5) between them form a second passage (38) which connects the jacket-like cavity (25) to the second short-circuiting ring (28).

10. Electric machine (39), comprising
- a rotor (1) according to Claim 8 or 9,
- a stator (40),
- a first stator end winding (41), and
- a second stator end winding (42),
wherein
- the first stator end winding (41) surrounds the first short-circuiting ring (27), and
- the second stator end winding (42) surrounds the second short-circuiting ring (28),
so that, during a rotation of the shaft journals (2, 3), a cooling medium can be centrifuged out of the radial bores (33, 34) radially to the outside in the direction of the stator end windings (41, 42) and can cool the stator end windings (41, 42) .

## Revendications

1. Rotor (1) pour une machine électrique (39), le rotor (1) comprenant un premier tourillon d'arbre (2), un deuxième tourillon d'arbre (3), un empilement de tôles de rotor (4) et un corps de remplissage (5),
- le corps de remplissage (5) étant moulé sur l'empilement de tôles de rotor (4), de telle sorte que l'empilement de tôles de rotor (4) soient supportés de manière solidaire en rotation sur le corps de remplissage (5),
- le corps de remplissage (5) étant connecté de manière solidaire en rotation aux tourillons d'arbre (2, 3), de telle sorte qu'un couple soit transmis des tourillons d'arbre (2, 3) à l'empilement de tôles de rotor (4),
**caractérisé en ce**
- **qu'**un canal de refroidissement (23) traverse les tourillons d'arbre (2, 3) et le corps de remplissage (5) dans une direction axiale (L) du rotor (1),
- au moins l'un des tourillons d'arbre (2, 3) présentant un disque d'extrémité (19, 20) disposé du côté frontal pour la fixation au corps de remplissage (5).

2. Rotor (1) selon la revendication 1, dans lequel
- le premier tourillon d'arbre (2) présente un premier alésage axial (21),
- le deuxième tourillon d'arbre (3) présente un deuxième alésage axial (22),
- le corps de remplissage (5) présente un troisième alésage axial (6), le troisième alésage axial (6) reliant le premier alésage axial (21) au deuxième alésage axial (22) de telle sorte que le premier alésage (21), le deuxième alésage (22) et le troisième alésage (6) constituent ensemble le canal de refroidissement (23) qui s'étend à travers le premier tourillon d'arbre (2), le corps de remplissage (5) et le deuxième tourillon d'arbre (3).

3. Rotor (1) selon la revendication 1 ou 2, dans lequel le premier tourillon d'arbre (2), le deuxième tourillon d'arbre (3) et le corps de remplissage (5) sont réalisés d'une seule pièce.

4. Rotor (1) selon l'une quelconque des revendications précédentes, dans lequel l'empilement de tôles de rotor (4) est connecté dans la direction axiale (L) par engagement par correspondance de formes et par force au corps de remplissage (5) .

5. Rotor (1) selon l'une quelconque des revendications précédentes, dans lequel au moins l'un des tourillons d'arbre (2, 3) présente un appendice (11, 12) de centrage disposé du côté frontal.

6. Rotor selon la revendication 1, le rotor comprenant en outre un élément de canal de fluide (24),
- le premier tourillon d'arbre (2) présentant un premier alésage axial (21),
- le deuxième tourillon d'arbre (3) présentant un deuxième alésage axial (22),
- l'élément de canal de fluide (24) étant disposé entre les tourillons d'arbre (2, 3) et le corps de remplissage (5),
- l'élément de canal de fluide (24) et le corps de remplissage (5) constituant entre eux une cavité en forme d'enveloppe (25),
- l'élément de canal de fluide (24) présentant un quatrième alésage axial (6.1), le quatrième alésage axial (6.1) reliant le premier alésage (21) du premier tourillon d'arbre (2) au deuxième alésage (22) du deuxième tourillon d'arbre (3) de telle sorte que le premier alésage axial (21), le deuxième alésage axial (22) et le quatrième alésage axial (6.1) constituent ensemble le canal de refroidissement (23) qui s'étend à travers le premier tourillon d'arbre (2), le corps de remplissage (5) et l'élément de canal de fluide (24).

7. Rotor (1) selon la revendication 6, dans lequel le premier tourillon d'arbre (2) et/ou le deuxième tourillon d'arbre (3) sont réalisés d'une seule pièce avec l'élément de canal de fluide (24).

8. Rotor (1) selon l'une quelconque des revendications précédentes, le rotor (1) comprenant en outre :
- une première bague de court-circuit (27) et
- une deuxième bague de court-circuit (28),
- le premier tourillon d'arbre (2) présentant un premier alésage radial (33), et
- le deuxième tourillon d'arbre (3) présentant un deuxième alésage radial (34),
- le premier alésage radial (33) étant connecté au premier alésage axial (21),
- le deuxième alésage radial (34) étant connecté au deuxième alésage axial (22),
- la première bague de court-circuit (27) entourant radialement le premier alésage radial (33), et
- la deuxième bague de court-circuit (28) entourant radialement le deuxième alésage radial (34) de telle sorte que dans le cas d'une rotation des tourillons d'arbre (2, 3), un fluide de refroidissement puisse être accéléré hors des alésages radiaux (33, 34) radialement vers l'extérieur dans la direction des bagues de court-circuit (27, 28) et puisse refroidir les bagues de court-circuit (27, 28).

9. Rotor (1) selon l'une quelconque des revendications 6 et 7, dans lequel :
- l'élément de canal de fluide (24) présente un troisième alésage radial (35) et un quatrième alésage radial (36),
- le troisième alésage radial (35) et le quatrième alésage radial (36) relient le quatrième alésage axial (6.1) à la cavité en forme d'enveloppe (25),
- le premier tourillon d'arbre (2) et le corps de remplissage (5) constituent entre eux un premier passage (37) qui relie la cavité en forme d'enveloppe (25) à la première bague de court-circuit (27) et
- le deuxième tourillon d'arbre (3) et le corps de remplissage (5) constituent entre eux un deuxième passage (38) qui relie la cavité en forme d'enveloppe (25) à la deuxième bague de court-circuit (28).

10. Machine électrique (39), comprenant
- un rotor (1) selon la revendication 8 ou 9,
- un stator (40),
- une première tête d'enroulement statorique (41), et
- une deuxième tête d'enroulement statorique (42),
- la première tête d'enroulement statorique (41) entourant la première bague de court-circuit (27), et
- la deuxième tête d'enroulement statorique (42) entourant la deuxième bague de court-circuit (28),
de telle sorte que dans le cas d'une rotation des tourillons d'arbre (2, 3), un fluide de refroidissement puisse être accéléré hors des alésages radiaux (33, 34) radialement vers l'extérieur dans la direction des têtes d'enroulement statoriques (41, 42) et puisse refroidir les têtes d'enroulement statoriques (41, 42).
